(19) Europäisches Patentamt / European Patent Office / Office européen des brevets

(11) **EP 2 280 833 B2**

(12) # NEW EUROPEAN PATENT SPECIFICATION
## After opposition procedure

(45) Date of publication and mention
of the opposition decision:
**22.03.2023 Bulletin 2023/12**

(45) Mention of the grant of the patent:
**02.12.2015 Bulletin 2015/49**

(21) Application number: **09739473.8**

(22) Date of filing: **23.04.2009**

(51) International Patent Classification (IPC):
***G06K 15/10*** *(2006.01)*

(52) Cooperative Patent Classification (CPC):
**G06K 15/102; G06K 15/021;** B41J 2/185

(86) International application number:
**PCT/US2009/041518**

(87) International publication number:
**WO 2009/134671 (05.11.2009 Gazette 2009/45)**

(54) **PRINTING METHOD**

DRUCKVERFAHREN

PROCÉDÉ D'IMPRESSION

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **28.04.2008 GB 0807683**

(43) Date of publication of application:
**09.02.2011 Bulletin 2011/06**

(73) Proprietor: **Videojet Technologies, Inc.
Wood Dale, IL 60191 (US)**

(72) Inventors:
• **BLOWFIELD, Philip, John
Northants NN14 3HF (GB)**
• **LECHEHEB, Ammar
Cambridge CB2 5PR (GB)**

(74) Representative: **Marks & Clerk LLP
15 Fetter Lane
London EC4A 1BW (GB)**

(56) References cited:
**WO-A1-93/10977 US-A- 4 439 775
US-A- 6 109 739 US-B2- 6 843 555**

**EP 2 280 833 B2**

## Description

The present invention relates to a method of printing. More particularly, the invention relates to a method of printing using an ink jet printer such as a continuous ink jet printer.

In ink jet printing systems the print is made up of individual droplets of ink generated at a nozzle and propelled towards a substrate. There are two principal systems: drop on demand ink jet printing where ink droplets for printing are generated as and when required; and continuous ink jet printing in which droplets are continuously produced and only selected ones are directed towards the substrate, the others being recirculated to an ink supply.

Continuous ink jet printers supply pressurised ink to a print head drop generator where a continuous stream of ink emanating from a nozzle is broken up into individual regular drops. The drops are directed past a charge electrode where they are selectively and separately given a predetermined charge before passing through a transverse electric field provided across a pair of deflection plates. Each charged drop is deflected by the field by an amount that is dependent on its charge magnitude before impinging on the substrate whereas the uncharged drops proceed without deflection and are collected at a gutter from where they are recirculated to the ink supply for reuse. The charged drops bypass the gutter and hit the substrate at a position determined by the charge on the drop and the position of the substrate relative to the print head. Typically the substrate is moved relative to the print head in one direction and the drops are deflected in a direction generally perpendicular thereto.

Images to be printed are often defined with reference to a regularly arranged array of pixels. By specifying some pixels in the array which are to be printed, and other pixels in the array which are not to be printed, the image to be printed can be defined.

In continuous ink jet printing a character is printed from a matrix comprising a regular array of potential drop positions. Each matrix comprises a plurality of columns (strokes), each being defined by a line comprising a plurality of potential drop positions determined by the charge applied to the drops. Thus each usable drop is charged according to its intended position in the stroke. If a particular drop is not to be used then the drop is not charged and it is captured at the gutter for recirculation. This cycle repeats for all strokes in a matrix and then starts again for the next character matrix.

It will therefore be appreciated that there is a requirement to convert pixel data defined with reference to an array, to data specified in terms of potential drop positions. Further, it is often the case that a particular continuous ink jet printer can print using various different matrices of drop positions, and different conversions are required depending upon the matrix of drop positions which Is used.

Continuous ink jet printers are one of a variety of printer types which are used to print data onto products and product packaging as products pass along a packaging line. The data to be printed often takes the form of a "best before" date or a batch code. In such applications the speed at which the substrate on which printing is to occur passes the print head will be determined by the speed at which products pass along the packaging line. The printing process will need to take this speed into account, so as to ensure that print is correctly deposited on the substrate. It is known, therefore, to provide printers which are to be used to print data onto products and product packaging with an input which is usable to indicate a substrate movement speed, the input speed being used to control operation of the printer.

US 4,439,775 describes a multiple speed printer. A data input designates to a dot selector a character to be printed. A speed selector is operable to select a standard printing speed or a high printing speed. If standard speed printing is selected, the dot selector accesses a standard speed character matrix memory and receives dot position information corresponding to the designated character. If high speed printing is selected, the dot selector accesses a high-speed character matrix memory and receives dot position information corresponding to the designated character.

US 6,109,739 describes dot positioning for a continuous inkjet printer. A set number of drops is assigned to a stroke, but the number of positions which can be printed on a stroke is greater than the number of drops on the stroke. This apparently allows for improved fonts at the same print speed.

It is an object of an embodiment of the present invention to provide a method of printing, and more particularly a method of printing which can be used to control a continuous ink jet printer to effectively print data onto products moving along a packaging line.

The invention allows appropriate printer control data to be selected based upon the maximum number of drops of ink which can be emitted from the print head during a stroke. As described in further detail below, the maximum number of drops of ink which can be emitted from the print head during a stroke will vary in dependence upon various operating parameters of the printer. For example, the maximum number of drops of ink which can be emitted from the print head will vary in dependence upon the speed of the substrate and also the rate at which drops can be generated by the printer. By taking into account the maximum number of drops of ink which can be emitted from the print head during a stroke, the method of the invention allows the print head to dynamically adapt so as to take into account the maximum number of drops of ink which can be emitted from the print head in a given circumstance.

The image data may define a plurality of image strokes, each image stroke comprising data values for each of a predetermined number of pixels. The characteristic of the image may comprise a number of pixels defining each image stroke.

The printer control data may indicate a relationship between pixels of the image data and drops of ink to be emitted from the print head. The printer control data is sometimes referred to as raster data.

The plurality of drops of ink which are to be emitted from the print head to print a stroke may comprise a first plurality of drops of ink emitted from the print head for deposition on the substrate. The plurality of drops of ink may further comprise at least one drop of ink not intended for deposition on a substrate. The at least one drop of ink not intended for deposition on the substrate may be, for example, a guard drop.

The method may further comprise receiving user input indicating a maximum number of drops of ink which can be emitted from a print head to print a stroke. More preferably, data is processed to determine the maximum number of drops of ink which can be emitted from the print head to print a stroke. The processing may comprise processing data indicating a speed of substrate movement. The speed of substrate movement may be defined with reference to a clock rate of the printer. The substrate may be moved past the print head by conveyer, and the data indicating the speed of substrate movement may indicate a speed of conveyer movement. The method may further comprise receiving data indicating rotational movement of a component associated with the conveyer, and determining the speed of conveyer movement based upon said data indicating rotational movement.

By determining the speed of substrate movement, and taking into account the received image data, printer control data can be generated which allows an image to be effectively printed. In particular, determination of a speed parameter allows printing to properly take into account substrate speed, without being dependent upon a user input indicative of substrate speed. The inventors have realised that dependence upon such a user input is undesirable in some circumstances, given that such an input is prone to user error, and a user may omit to change a speed input when the substrate speed is changed, thereby causing substandard printing to be carried out.

Processing data to determine a maximum number of drops which can be emitted from the print head to print a stroke may comprise determining a relationship between a clock rate of the printer and said data indicating rotational movement. The data indicating rotational movement may be data indicating a number of pulses received from a shaft encoder.

The printer control data may define a number of drops of ink to be emitted from the print head to print a stroke. The printer control data may be selected based upon a time taken to generate drops of ink at the print head. The time taken to generate drops of ink at the print head may be defined with reference to a clock rate of the printer. The method described above has particular applicability in continuous inkjet printing.

The printer control data may be selected from a set of printer control data comprising a plurality of printer control data items. The set of printer control data may be generated with reference to the predetermined number of pixels in a stroke of the image data. Each printer control data item may define a number of drops of ink to be emitted from the print head to print a stroke. The printer control data items may be ordered in the set of printer control data based upon the respective number of drops of ink to be emitted from the print head. Selecting printer control data may comprise processing the printer control data items based upon the order. For example, each printer control data item can be processed in turn in accordance with the order until printer control data defining a number of drops not greater than the maximum number of drops which can be emitted from the print head to print a stroke is located. If no such printer control data item is located, the printer control data item defining the smallest number of drops to print a stroke may be used.

The set of printer control data may be selected from a plurality of sets of printer control data based upon the characteristic of the image.

The invention can be implemented in any suitable way. For example, it will be appreciated that the method described above can be carried out by a suitably configured inkjet printer comprising an ink supply system providing ink to a print head and a controller configured to carry out the method set out above. The controller may be provided by a microprocessor. As such, the invention provides a computer program comprising computer readable instructions arranged to carry out the method set out above.

An embodiment of the present invention will now be described, by way of example, with reference to the accompanying drawings, in which:

Figure 1 is a schematic illustration of a continuous inkjet printer;

Figure 2 is a schematic illustration of an array of pixels usable to define an image to be printed using the continuous ink jet printer of Figure 1;

Figure 3 is a schematic illustration of control components of the continuous inkjet printer of Figure 1;

Figure 4 is a table showing raster families used by the continuous inkjet printer of Figure 1;

Figure 5 is a schematic illustration of a raster file defining raster data;

Figure 6 is a schematic illustration showing how raster files are processed in the continuous ink jet printer of Figure 1;

Figure 7 is a schematic illustration of a raster catalogue created in the processing of Figure 6;

Figure 8 is a flow chart showing how the raster catalogue of Figure 7 is used in creating a raster map table;

Figure 9 is a schematic illustration of an inheritance table defining relationships between raster families, as used in the processing of Figure 8;

Figure 10 is a schematic illustration of a raster map table created using the processing of Figure 8 and based upon the raster catalogue of Figure 7;

Figure 11 is a flow chart showing how raster data is provided to raster memory using the raster catalogue Figure 7;

Figure 12 is a flow chart showing how raster data for use in a printing operation is selected;

Figure 13 is a flowchart of processing carried out to determine substrate speed with reference to an external measurement device; and

Figure 14 is a screen shot taken from a user interface provided by the described printer.

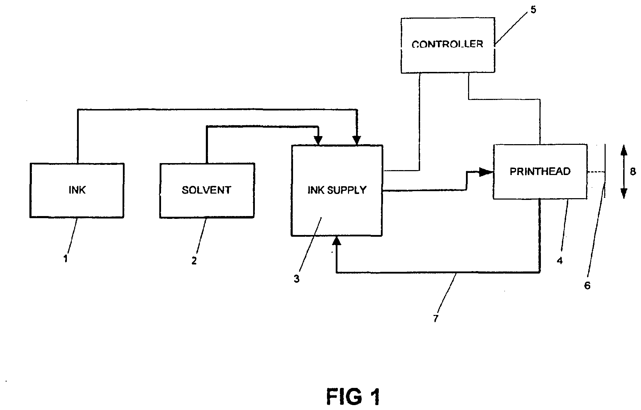

Referring to Figure 1, it can be seen that an ink cartridge 1 and a solvent cartridge 2 respectively provide ink and solvent to an ink supply tank 3. An ink solvent mixture created in the ink supply tank 3 is provided to a print head 4. A controller 5 controls operation of the ink supply tank 3 and the print head 4.

The print head 4 comprises a drop generator where a continuous stream of ink emanating from a nozzle is broken up into individual regular drops by an oscillating piezoelectric element. The drops are directed past a charge electrode where they are selectively and separately given a predetermined charge before passing through a transverse electric field provided across a pair of deflection plates. Each charged drop is deflected by the field by an amount that is dependent on its charge magnitude before impinging on a substrate 6 whereas the uncharged drops proceed without deflection and are collected at a gutter from where they are recirculated to the ink supply tank 3 for reuse along a recirculation path 7. The charged drops bypass the gutter and hit the substrate 6 at a position determined by the charge on the drop and the position of the substrate 6 relative to the print head.

The substrate 6 is moved relative to the print head 4 in one direction and the drops are deflected in a direction generally perpendicular thereto, although the deflection plates may be oriented at an inclination to the perpendicular to compensate for the speed of the substrate (the movement of the substrate relative to the print head between drops arriving means that a line of drops would otherwise not quite extend perpendicularly to the direction of movement of the substrate). In the illustration of Figure 1 the drops are deflected in the direction of an arrow 8.

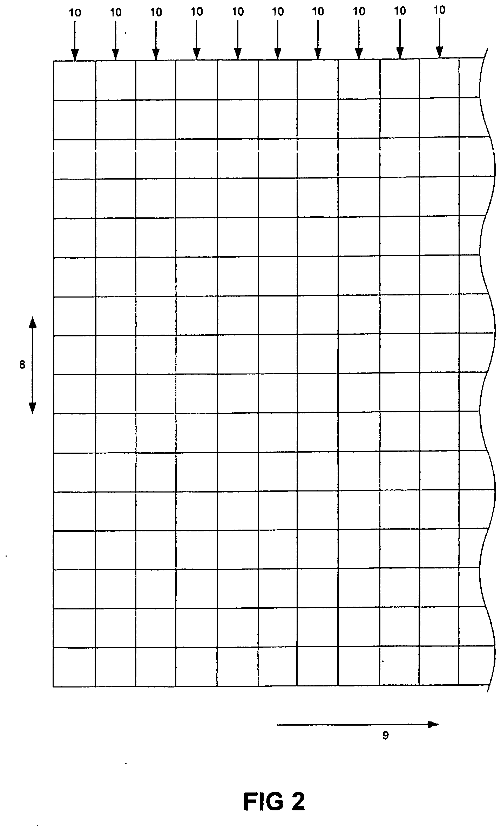

An image to be printed is often represented by a plurality of pixels arranged in a two-dimensional regular array, as shown in Figure 2. One axis of the array is defined in the direction of the arrow 8, while the other axis of the array is defined in the direction of an arrow 9 which indicates a direction in which the substrate 6 is moved past the print head 4. The array is made up of a plurality of strokes 10, each stroke defining a column of pixels extending in the direction of the arrow 8, which is perpendicular to the direction of movement of the substrate 6 as indicated by the arrow 9. In the example of Figure 2 it can be seen that each stroke is made up of sixteen pixels. The plurality of strokes are printed by moving the substrate 6 relative to the print head 4 in the direction of the arrow 9. An image is defined by selecting pixels in the array which are to be printed to define the image. For example, if all pixels in the array are selected, the image will comprise a rectangle having dimensions determined by the array.

It is often desirable to allow different images to be defined using arrays having different dimensions. For example, in some cases a stroke may comprise only five pixels, while in other cases a stroke may comprise fourteen pixels arranged in two groups of seven, thereby allowing two parallel images (e.g. two lines of text) to be defined using the array.

As described with reference to Figure 1, drops of ink are deflected by the print head in the direction of the arrow 8. In this way drops of ink can be deflected so as to cause particular pixels within an array to be printed. There is sometimes a one-to-one mapping between pixels and drops of ink (i.e. if each pixel is printed by a single drop of ink). However it is often desirable to use more drops of ink to print a particular stroke than there are pixels within that stroke so as to improve print quality. Data defining a relationship between a number of pixels within a stroke and a number of drops of ink used to print that stroke is referred to as raster data.

It will be appreciated that using additional drops of ink increases the time taken to print a stroke. The time available to print a stroke is determined by the speed of movement of the substrate and the speed at which the printer is able to generate drops of ink. The substrate is often moved past the print head 4 in the direction of the arrow 9 by a conveyor. For example, the substrate is often a product or a label adhered to a product, and the speed of movement of the substrate is determined by the speed of movement of a conveyor carrying products. In some embodiments of the invention the speed of the conveyor is determined, and the determined speed is used to select raster data defining an appropriate relationship between a number of pixels in a stroke and the number of drops of ink which are to be used to print that stroke. Such selection of raster data is described in further detail below.

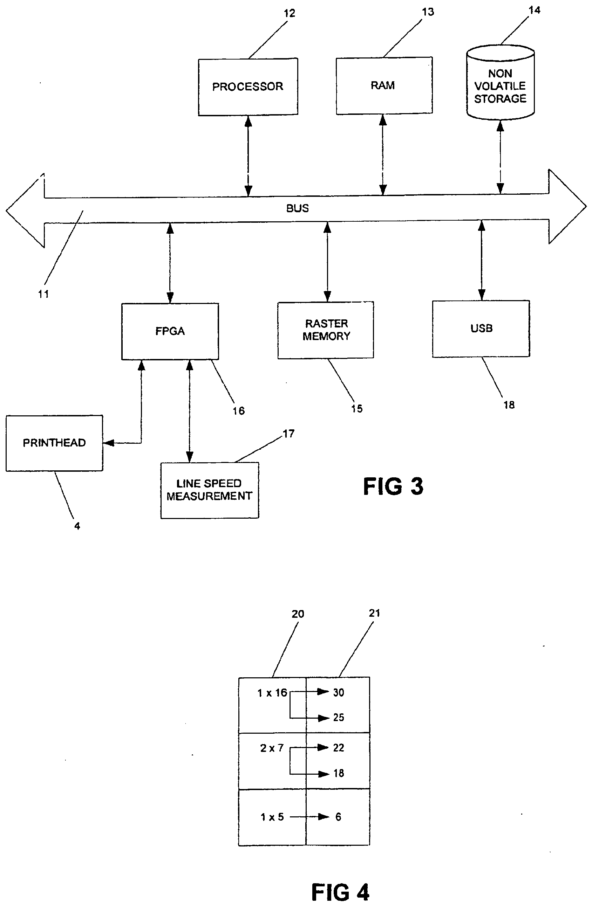

Figure 3 schematically illustrates control components of the printer of Figure 1 which make up the controller 5. The components shown in Figure 3 are connected together by a bus 11. A processor 12 controls operation of the printer by executing instructions which are stored in volatile memory in the form of RAM 13. Instructions may be stored in non-volatile memory 14 and read into the RAM 13 under the control of the processor 12. Raster data to be used in printing operations is stored in raster memory 15. Although shown separately in Figure 2 it will be appreciated that in some embodiments a single memory device may provide the RAM 13 and raster memory 15. Raster data stored in the raster memory 15 is used by a field programmable gate array (FPGA) 16 in controlling the print head 4, as is described in further detail below. This raster data may be stored in the non-volatile storage 14 and downloaded to the raster memory 15 under the control of the processor 12. As indicated previously, the selection of raster data may be based upon the determined speed of a conveyor, and appropriate speed data is therefore provided to the FPGA 16 from a line speed measurement device 17. The printer further comprises a universal serial bus (USB) interface 18 to which appropriate external storage devices may be connected. In this way data including raster data may be provided to the printer for storage in the non-volatile storage 14 from a device external to the printer.

Figure 4 shows how raster data is defined. A first column 20 defines a plurality of stroke arrangements in terms of a number of pixels included in a stroke and the way in which those pixels are arranged. It can be seen in Figure 4 that a first row relates to a stroke having sixteen pixels arranged in a single group, a second row relates to a stroke having fourteen pixels arranged in two groups of seven, while a third row relates to a stroke having five pixels arranged in a single group. Each row defines a raster family, that is a raster family is defined by a number of pixels included in a particular stroke.

A second column 21 defines a number of drops which are to be used to create the required number of pixels in a stroke. The number of drops used includes drops which are printed and drops which are projected from a nozzle and recirculated to the ink supply tank 3. Such drops are referred to as 'guard drops'. It is known in the art to project guard drops from the nozzle with the intention that they are recirculated to the ink supply tank 3. In this way, uncharged or differently charged drops may be projected from the nozzle between two drops having a similar charge, so as to prevent interference between charged drops intended for use in printing. Such interference is undesirable as it can affect the quality of print produced. It can be seen from Figure 4 that an array of sixteen pixels arranged in a single group can be printed using either thirty drops of ink or twenty-five drops of ink. While printing using thirty drops of ink in a stroke will produce higher quality print, it will also take longer and may therefore not be possible if the substrate is moving relatively quickly.

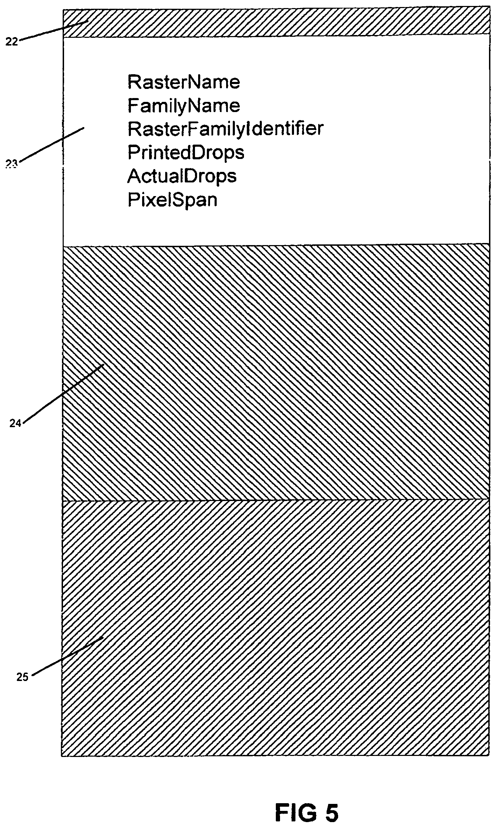

Raster data used in the described embodiment is defined by a raster file. A suitable structure for such a file is shown in Figure 5, and is now described. The file begins with a file header 22 indicating the nature of the file and including version control data.

A particular raster is then defined first by data included in a raster header 23. The raster header 23 includes a plurality of variables having associated values. A RasterName variable specifies a textual string providing a name for the raster. A FamilyName variable specifies a textual string providing a name for the raster family, that is an easily understandable description of the number of pixels included within a stroke (e.g. "16-high" for the raster family represented by the first row of the table of Figure 2). A RasterFamilyIdentifierValue variable specifies data identifying a family to which the Raster belongs. A PrintedDrops variable specifies data indicating a number of drops which are printed to print the pixels within a stroke. An ActualDrops tag indicates a total number of drops of ink which are to be ejected from the nozzle in the printing of a single stroke, including printed drops and non-printed drops (non-printed drops are those which are not used for printing but guard drops are caught in a gutter and re-circulated to the ink supply tank 3 as described above). The raster header 23 further includes a PixelSpan variable indicating data representing a total number of pixels in a stroke which can be printed using that raster.

The raster header 23 will also, typically, comprise data indicating how guard drops should be used in printing using that raster.

The raster file of Figure 5 further comprises a drop definitions section 24 comprising a plurality of definitions, one for each drop to be printed. The drop definitions section 24, together with information indicating how guard drops should be used specified within the raster header 23, allows guard drops to be used to obtain good quality print.

The raster file of Figure 5 ends with a charge table section 25 indicating how drops should be charged to cause printing.

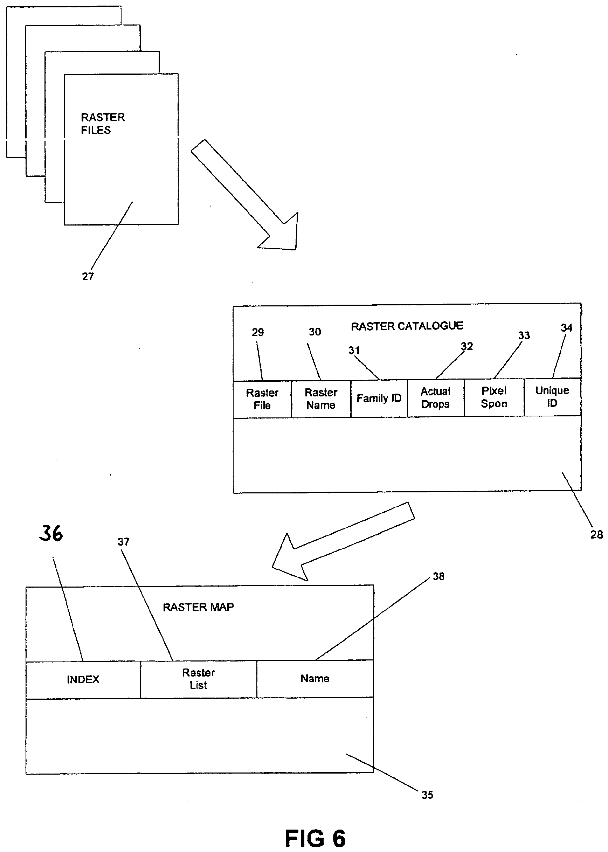

Each raster is defined using a raster file of the form described with reference to Figure 5. Processing of raster files is now described with reference to Figure 6.

Raster files 27 are read into RAM 13 by the processor 12 for processing. This processing creates a raster catalogue 28 specifying details of each raster file. The raster catalogue 28 is created as part of the printer's start up processing, and is also carried out whenever a new raster file 27 is stored in the non-volatile storage 14, or a raster file stored in the non-volatile storage 14 is modified.

The raster catalogue 28 comprises an entry for each processed raster file 27. Each entry comprises a RasterFile field 29 specifying a string indicating the name of the raster file represented by that entry, and a RasterName field 30 specifying a string indicating the name of the raster, as obtained from the RasterName variable of the processed raster file. A FamilyID field 31, an ActualDrops field 32 and a PixelSpan field 33 each specify data which is read from a corresponding variable of the processed raster file. A UniqueID field 34 specifies data which acts as an identifier for the raster and which is created during creation of the raster catalogue 28 as is now described.

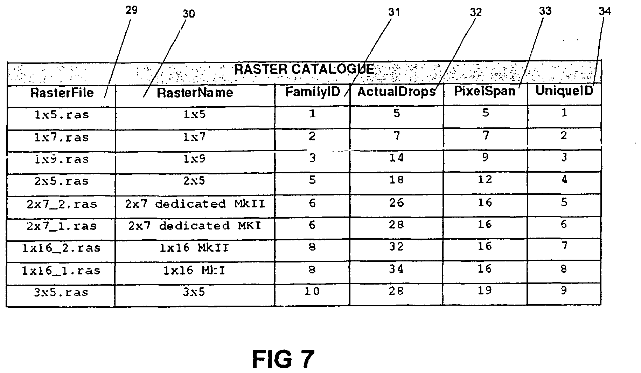

Entries in the raster catalogue 28 are stored in ascending order of the value stored in the FamilyID field 31. Entries having the same value in the FaimlyID field 31 are further sorted in ascending order of the value stored in the ActualDrops field 32. When entries in the raster catalogue have been sorted as described above, a unique identifier is allocated to each entry in order, and stored in the UniqueID field 34. An example of a raster catalogue created using the processing described above is shown in Figure 7.

In some embodiments of the invention the number of entries in raster catalogue 28 is limited given storage limitations of the printer. For example, in one embodiment the number of entries in the raster catalogue 28 is limited to 128, and a warning message is provided if more than 128 raster files are available for processing, indicating that only the first 128 files will be processed in the manner described above.

As shown in Figure 6, a raster map table 35 is created from the raster catalogue 28. Each entry in the raster map table contains between one and eight raster specifications that can be used to print an image defined using strokes comprising a particular number of pixels. Each entry in the raster map table 35 comprises an index 36 a name 37 and a list of rasters 38, the list of rasters 38 identifying particular rasters by reference to values of the UniqueID field 34 of the raster catalogue 28.

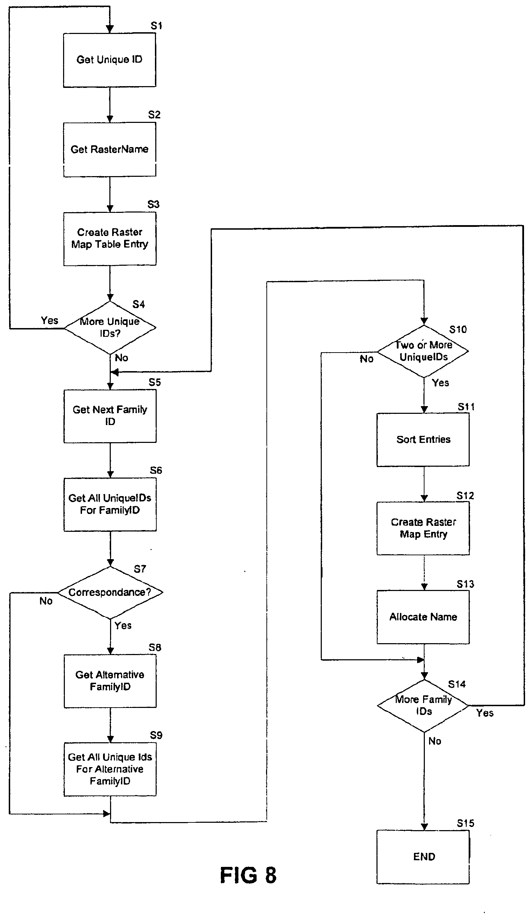

Creation of the raster map table 35 is now described with reference to the flow chart of Figure 8. Steps S1 to S4 create one entry in the raster map table 35 for each raster file represented by an entry of the raster catalogue 28. At step S1 a value of the UniqueID field 34 in the raster catalogue 28 is selected for processing. At step S2 a raster name associated with the selected identifier is obtained from the RasterName field 30 of the appropriate entry of the raster catalogue 28. At step S3 a raster map table entry is created using the obtained values of the UniqueID field 34 and RasterName field 30. At step S4 a check is made to determine whether further records of the raster catalogue 28 remain to be processed. If this is the case, processing returns to step S1. Otherwise, processing passes from step S4 to step S5.

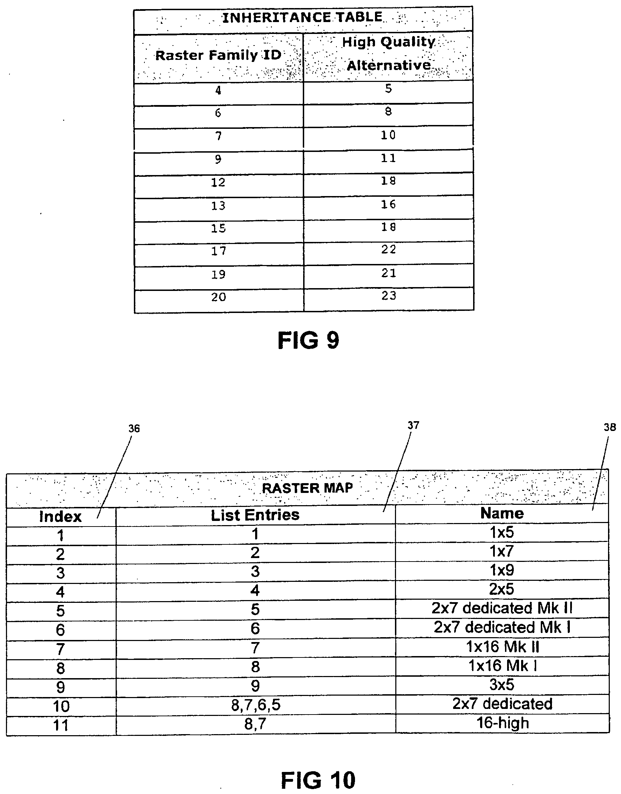

Steps S5 to S13 create entries in the raster map table 35 for each raster family, where that family has more than one associated raster. At step S5 a family identifier is selected for processing. At step S6 all values of the UniqueID field 34 for entries in the raster catalogue 28 associated with the selected family identifier are obtained. At step S7 a check is carried out to determine whether the processed family identifier has an associated alternative family identifier. That is, raster data defined with reference to one raster family may be usable in printing operations based upon a different raster family. Such relationships are defined by an inheritance table of the type shown in Figure 9 from which it can be seen, for example, that raster family 8 can be used as an alternative to raster family 6. That is, where an image to be printed specifies raster data from raster family 6, raster data from raster family 8 can be used. Thus, if the processed family identifier at step S7 is '6', it is determined at that there is an associated alternative family identifier. In this case the alternative family identifier obtained at step S8 is '8'. At step S9 values of the UniqueID field 34 for all entries of the raster catalogue 28 associated with the alternative family identifier are obtained, and added to the list of Unique ID values which is being created.

Processing passes from step S9 to step S10, and if there is no alternative family identifier for a processed family identifier, processing passes directly from step S7 to step S10. At step S10 a check is carried out to determine whether there are two or more unique identifiers associated with the processed family identifier. If this is the case, processing passes to step S11 where the unique identifiers are sorted into ascending order of the corresponding ActualDrops field 32 of the raster catalogue 28. At step S12 an entry in the raster map table is created, and the created entry is allocated a name at step S13 based upon the family identifier selected for processing at step S5.

Processing passes from step S13 to step S14. Processing also passes directly from step S10 to step S13 where a processed family identifier has only identified a single UniqueID associated with that processed family identifier. At step S14 a check is carried out to determine whether further family identifiers remain to be processed. If this is the case processing returns to step S5, otherwise processing ends at step S 15.

Figure 10 shows the raster map table created by processing the raster catalogue of Figure 7 in the manner described above. Entries in the raster map table shown having Index values from 1 to 9 are created by steps S1 to S4 of Figure 8, each entry corresponding to a value of the UniqueID field of the raster catalogue 28. The Entry having index 10 was created by processing the FamilyID value 6, which identified UniqueID values of 5 and 6 at step S6, and identified an alternative FamilyID value of 8 at step S8 (from the inheritance table of Figure 9), which identified UniqueID values of 7 and 8. Thus, the entry of the raster map table having an index value of 10 has a Name value of "2x7 dedicated" which is associated with the processed FamilyID value of '6' and a list of rasters comprising UniqueID values of 8, 7, 6 and 5. those UniqueID values being sorted on the basis indicated above. It can he seen that the list of UniqueID values is created with reference to both the processed Family ID value of 6 and the alternative Family ID value of 8.

The entry of the raster map table of Figure 10 having an Index value of 11 was created by processing the FamilyID value of 8. In this case the list of UniqueID values associated with the Index value of 11 was created solely at step S6 given that there is no alternative FamilyID value provided for the FamilyID value of 8 in the inheritance table of Figure 9.

The raster map table 35 created as described above allows a raster for a particular printing operation to be selected by searching the raster map table based upon values of the name field. Where a search is carried out using a family name it can be seen that, where available, a plurality of different rasters are identified sorted based upon a number of drops used by the particular raster.

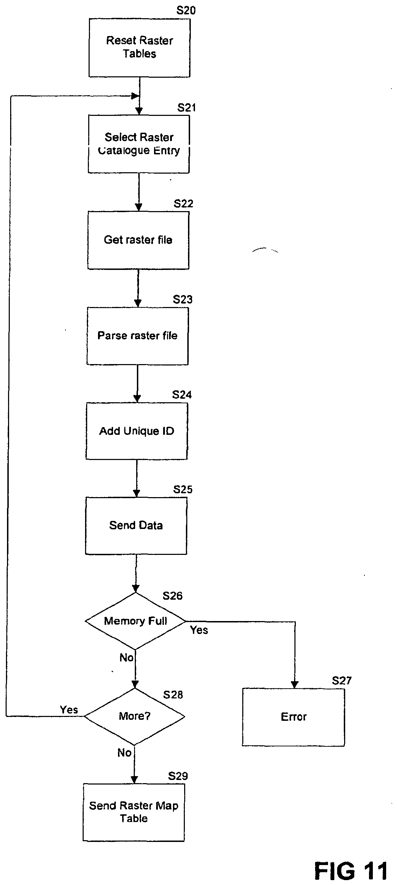

When the raster catalogue 28 has been created as described above, raster data is transferred to the raster memory 15 (Figure 3) associated with the FPGA 16 under the control of the processor 12 as is now described with reference to Figure 11.

At step S20 a reset raster tables packet is sent to the raster memory 15 by the processor 12 to ensure that the raster memory 15 is in a known state. The processing of steps S21 to S28 provides raster data to the raster memory 15 by processing the raster catalogue 28. At step S21 an entry of the raster catalogue 28 is selected for processing. Each entry in the raster catalogue is processed in turn, but the order of processing does not matter. At step S22 the appropriate raster file is obtained, having been identified using the RasterFile field 29 of the raster catalogue 28. The obtained raster file is parsed at step S23 so as to create data in an appropriate format for sending to the raster memory 15 for processing by the FPGA 16. Having created data for sending to the raster memory 15 the value of the UniqueID field 34 of the relevant entry of the raster catalogue 28 is obtained and added to the data to be sent to the raster memory 1 at step S24. Data is sent to the raster memory 15 at step S25. At step S26 a check is made to determine whether the raster memory 15 is full. If this is the case, an error is reported at step S27. Otherwise, processing passes to step S28 where a check is made to determine whether further entries in the raster catalogue 28 remain to be processed. If this is the case, processing returns from step S28 to step S21, otherwise processing passes from step S28 to step S29.

At step S29 the created raster map table 35 is provided to the raster memory 15. The raster map table 35 is provided to the raster memory 15 in the format described above, save that the name field is not provided. A print command provided to the FPGA 16 specifies an entry in the raster map table which should be used in a particular print operation by specifying a value of the Index field as described further below. Where an entry is specified which refers to more than one raster, the FPGA selects an appropriate raster for use as described in further detail below.

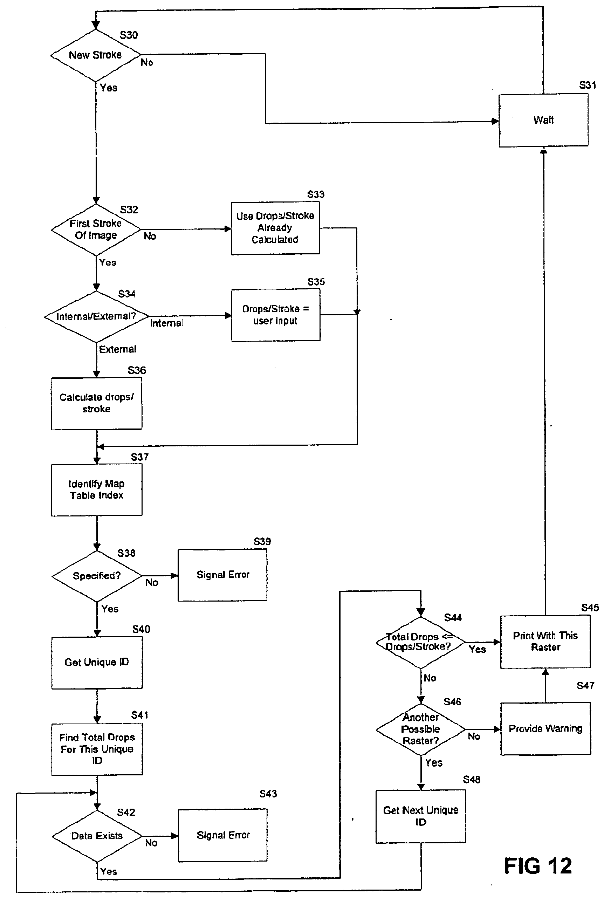

Processing carried out to print an image is now described with reference to the flow chart of Figure 12. The processing of Figure 12 is carried out by the FPGA 16. At step S30 a check is carried out to determine whether a signal has been received indicating that a further stroke should be printed. If no such signal has been received processing passes from step S30 to step S31 where a wait operation is performed. When an appropriate signal has been received, processing passes from step S30 to step S32. At step S32 a check is carried out to determine whether the stroke to be printed is the first stroke of an image. If this is not the case processing passes from step S32 to step S33 where the number of drops usable to print the image is set to be the number used to print the previous stroke. Processing continues from step S33 at step S37 which is described below.

If it is determined at step S32 that the stroke to be printed is the first stroke of an image, processing passes from step S32 to step S34. Here a check is carried out to determine how the maximum number of drops which can be used to print a stroke is to be determined. If the maximum number of drops is to be determined internally within the printer processing passes from step S34 to step S35 where the maximum number drops which can be printed in any one stroke is determined with reference to data input by a user. More specifically, the user may input data indicating a maximum number of drops which may be used to print a single stroke, and this data can be used at step S35. If the speed is to be determined externally, processing of appropriate external parameters takes place at step S36, where a maximum number of drops which can be used in a stroke is determined. The use of external data to determine the maximum number of drops that can be used is described in further detail below.

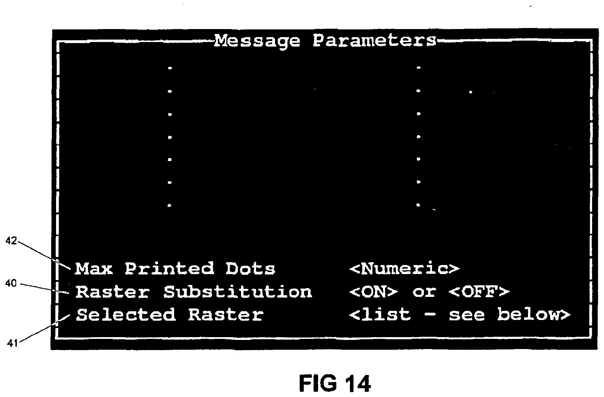

Processing passes from each of steps S35 and S36 to step S37. At step S37 an index of the raster map table which is suitable for the stroke to be printed is determined. This index is provided to the FPGA 16 by software running on the processor 12. (The determination of the index is described in further detail below with reference to Figure 14). When the appropriate index of the raster map table has been identified, a check is made at step S38 to determine whether an entry having the provided index exists, and if this is not the case, an appropriate error message is output at step S39. Otherwise, a unique identifier of the most preferred (i.e. highest quality) raster specified in association with the specified index is determined at step S40 by selecting an appropriate UniqueID value from the head of the list of rasters specified in the appropriate entry of the raster map table.

Processing passes from step S40 to step S41 where appropriate raster data is accessed and it is determined how many drops are required to print a stroke using the obtained raster data. At step S42 a check is made to determine whether the appropriate raster data exists. Again, if this is not the case an error message is provided at step S43.

Processing passes from step S42 to step S44 if appropriate data exists. At step S44 a check is made to determine whether the number of drops required by the processed raster data to print a stroke is less than or equal to the maximum number of drops which can be used to print a stroke, given the determination carried out at step S35 or step S36. If the check of step S44 is satisfied, processing passes to step S45 where the selected raster data is used for printing, before processing returns to step S31

If the check of step S44 determines that the currently selected raster data requires more drops to print a stroke than it has been determined is possible to use, processing passes to step S46 where a check is carried out to determine whether further suitable raster data exists. If this is not the case, the previously selected raster data is to be used, even though this might result in sub-standard print, given that the selected raster data requires more drops to print a stroke than it has been determined can be used to print a particular stroke. More particularly, the use of more drops to print a stroke than it has been determined can properly be used to print a stroke will result in the image being longer, that is, it will result in the image extending along the moving substrate for a longer distance than was intended. An appropriate warning message is therefore provided at step S47 before processing passes to step S45. If further raster data is available, processing passes from step S46 to step S48. At step S48 the next UniqueID in the relevant raster map table entry is selected, before processing returns to step S42.

Given the ordering of raster data within an entry of the raster map table 35 as described above, it can be seen that the processing of Figure 12 ensures that the raster data using the greatest number of drops in a stroke that can be printed in a particular stroke is selected. Where all stored raster data uses more drops than can be used, the raster data using the minimum number of drops is selected, and an appropriate warning is displayed.

It has been described above that processing passes from step S33 to step S37. It will be appreciated that in alternative embodiments of the invention processing may pass directly from step S33 to step S45, with the previously used raster simply being obtained and used for printing. That is, it will be appreciated that having determined the number of drops which are to be used to print a stroke in a previous stroke, the processing to identify a raster to be used need not be repeated, and as such that raster used for the previous stroke can simply be used at step S45. However, where an image is defined in such a way that different strokes are to be printed with differing raster data, it will be appreciated that processing needs to pass from step S33 to step S37. That is, when processing passes from step S33 to step S37 a different index of the raster map table can be used for each stroke of the image, the different indices being provided to the FPGA by software running on the processor 12 as described above.

The determination of the maximum number of drops that can be used in a particular stroke using external data is now described. The following description is based upon the use of a monitoring device which monitors the speed at which a substrate is moving past the printhead. In one embodiment the monitoring device takes the form of a shaft encoder which monitors rotation of a shaft which is indicative of movement of a conveyor which conveys the substrate past the printhead. Such a shaft encoder will provide a pulse for each rotation or each predetermined part of a rotation of the shaft, and such pulses are used as described below.

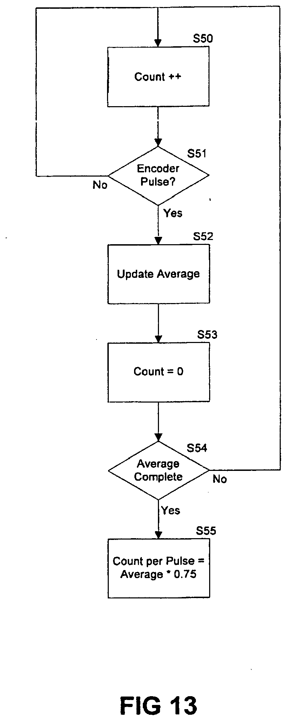

Figure 13 illustrates processing which may be carried out to determine a number of clock pulses of the printer which correspond to a single pulse of the shaft encoder.

At step S50 a counter parameter is incremented, and processing passes to step S51 where a check is made to determine whether a shaft encoder pulse has been detected. If no shaft encoder pulse has been detected, processing returns from step S51 to step S50. That is, the counter is incremented until an encoder pulse is received.

When an encoder pulse is received, processing passes from step S51 to step S52 where an average counter value between encoder pulses is updated, before the counter is reset to zero at step S53. Processing then passes to step S54 where a check is made to determine whether a sufficient number of counter values have been processed to provide a sufficiently accurate average value. If this is not the case processing returns to step S50 and continues as described above. When, however, a sufficient number of counter values have been processed to provide a sufficiently accurate average processing passes to step S35 where the count between encoder pulse is set to three-quarters (0.75) of the determined average. The factor of three-quarters is added to allow some variation in substrate speed without adversely affecting print quality as could occur if the average was too large a counter value.

It should be noted that the processing of Figure 13 is arranged to increment the counter value at step S50 once in each clock cycle of the printer. In this way, the counter variable is indicative of the number of clock cycles between encoder pulses.

It should further be noted that the processing of Figure 12 is carried out such that a value indicating a number of counts per pulse is available for use at step S36 of Figure 12. For example, the processing of Figures 12 and 13 may be carried out in parallel.

It has been described that the processing of Figure 13 allows determination of an indication of a number of clock cycles between two pulses of the shaft encoder. This number of clock cycles can be used to determine a number of drops which can be used to print a stroke as is now described.

First, it should be noted that the printer has knowledge of a relationship between shaft encoder pulses and linear movement. That is, data is stored in the RAM 13 which indicates a number of shaft encoder pulses which correspond to a millimetre of conveyor (and therefore substrate) movement.

This data is used to determined a number of shaft encoder pulses which are associated with a single stroke in the printed message, according to equation (1):

$$W=S1/ (Rm/M1) \qquad (1)$$

where:

W is the width divider and indicates the number of shaft encoder pulses which are associated with a single stroke in the printed message;
S1 is the number of shaft encoder pulses ner unit length of conveyor (and therefore substrate) movement
Rm is the number of strokes in a message to be printed; and
M1 is the length of the message in the direction of substrate movement.

It will be appreciated that the values of S1 and M1 should be in common units (e.g. mm)

The value of the width divider can then be used to determine a number of drops which can be used to print a signal stroke according to equation (2):

$$Ds=(CW)/Dr$$

Where:

Ds is the maximum number of drops per stroke;
C is the number of clock cycles per shaft encoder pulse, determined as described with reference to Figure 13;
W is the width divider described above with reference to equation (1); and
Dr is the drop rate of the printer, that is the number of clock cycles per drop, which is again stored by the printer.

It should be noted that in some embodiments a user may input a value for the parameter W directly (i.e. input data indicating the number of shaft encoder pulses which are associated with a single stroke in the printed message, rendering the calculation of equation (1) redundant.

The described printer is provided with an appropriate user interface, allowing various user selectable parameters to be specified. Figure 14 is a screen taken from such a user interface. The user interface shown in Figure 14 can be navigated using an appropriate input device such as a keyboard. A Raster Substitution parameter 40 indicates whether or not the printer should select appropriate raster data as described above (when set to 'ON') or whether a raster specified by a user in connection with a Selected Raster parameter 41 should always be used (when the Raster Substitution parameter 40 is set to 'OFF').

If the Raster Substitution parameter 40 is set to 'ON' the Selected Raster parameter 41 specifies a list of raster data. Each entry in the list is a raster family, which can be selected by a user of the interface of Figure 14. The list of raster families specified in connection with the Selected Raster parameter 41 is determined based upon properties of the image to be printed. It can be seen that the interface shown in Figure 14 includes a Max Printed Dots parameter 42 which indicates a maximum number of dots (i.e. pixels) which may be used to define a single stroke of the image. This data is compared with raster data referenced in the raster catalogue (Figures 6 and 7) based upon the PixelSpan field 33 of the raster catalogue. Raster families having a PixelSpan value which is greater than or equal to the number of pixels specified y the Max Printed Dots parameter 42 are included in a list associated with the Selected Raster parameter 41, in ascending order of pixel span. In this way, raster families suitable for use in printing the image specified in the interface shown in Figure 14 can be determined. A user selects one of the raster families from the list displayed in connection with the Selected Raster Parameter 41, and the selected raster family is used to determine the index of the raster map table which is used in the processing of Figure 12 described above.

For example, where the Max Printed Dots Parameter is 16, the raster families which can be used are:

TABLE 1

| Family ID | Family Name | Raster Names |
|---|---|---|
| 6 | 2x7 dedicated | 2x7 dedicated Mk I<br>2x7 dedicated Mk II |
| 8 | 16 High | 1x16 Mk I<br>1x 16 Mk II |

The Selected Raster Parameter 41 therefore provides a choice between "2x7 dedicated" and "16 High". If a user selects "2x7 dedicated", the appropriate entry of the raster map table (as shown in Figure 10) is used, and in this case the Index value of '10' is provided to the FPGA for use in printing operations. When a user makes a selection using the interface of Figure 14, the raster family name is stored in connection with the image to be printed. The family name is stored in preference to the index value, to allow for reorganisation of the raster catalogue and/or raster map table without requiring data stored in connection with the image to be changed.

If the Max Printed Dots parameter 42 is updated, the list associated with the Selected Raster Parameter 41 is regenerated, the currently selected raster family being the first entry in the newly generated list.

If the Raster Substitution parameter 40 is set to 'OFF' the Selected Raster parameter 41 is displayed in connection with names of specific raster data from which the user may select. The raster data to be displayed in connection with the Selected Raster parameter 41 is determined from the raster map table 35 with reference to entries of the raster map table 35 specifying a single raster (i.e. Index values of '0' to '9' of Figure 10). Only rasters having a PixelSpan value which is greater than or equal to the Max Printed Drops parameter 42 are included in the list shown in connection with the Selected Raster parameter 41, from which a user may select specific raster data.

For example, again where the Max Printed Dots Parameter is 16, the rasters which can be used are:

Table 2

| Index | Raster Name | Unique ID |
|---|---|---|
| 5 | 2x7 dedicated Mk II | 5 |
| 6 | 2x7 dedicated MK I | 6 |
| 7 | 1x16 dedicated Mk II | 7 |
| 8 | 1x16 dedicated Mk I | 8 |

When a user selects a raster to be used, the raster is identified by reference to its name as described above. Here, the selected raster, rather than raster family, is used to determine the index of the raster map table used in the processing of Figure 12 described above.

If the Raster Substitution parameter 40 value is changed, the list associated with the Selected Raster parameter 41 is again regenerated.

Although an embodiment of the invention has been described above in detail, it will be appreciated that various modifications can be made.

**Claims**

1. A method of printing an image on a substrate (6) wherein printing is effected by moving the substrate past a print head (4) during a printing operation and printing said image by printing a plurality of strokes,

   and printing each stroke comprises emitting a plurality of drops of ink from the print head (4),
   said plurality of drops of ink extending in a first direction (8) which is perpendicular to the direction (9) of movement of the substrate (6) past the print head, the method comprising:

   receiving image data defining an image to be printed, wherein said image data defines a plurality of strokes, each stroke comprising data values for each of a predetermined number of pixels, and
   printing said image;
   **characterised in that** the image data comprises data relating to a characteristic of the image;
   the method further comprises selecting printer control data defining the plurality of drops of ink which are to be emitted from the print head (4) to print one of said strokes, processing data to determine a maximum number of drops which can be emitted from the print head to print a stroke, wherein said processing comprises processing data indicating a speed of substrate movement;

said selecting being based upon data indicating said maximum number of drops of ink which can be emitted from the print head during one of said strokes and said characteristic of the image; and

said printing is based upon said data defining the image to be printed and said printer control data.

2. A method according to claim 1, wherein said characteristic of said image comprises a number of pixels defining each stroke of said image.

3. A method according to claim 2, wherein said printer control data defines a relationship between pixels of said image data and said drops of ink which are to be emitted from the print head during a stroke.

4. A method according to any preceding claim, wherein said plurality of drops of ink which are to be emitted from the print head to print a stroke comprise a first plurality of drops of ink emitted from the print head for deposition on the substrate, and optionally further comprise at least one drop of ink not intended for deposition on said substrate.

5. A method according to any preceding claim, wherein said substrate is moved past the print head by a conveyor, and said data indicating the speed of substrate movement indicates a speed of conveyor movement, the method optionally further comprising receiving data indicating rotational movement of a component associated with said conveyor, and determining a speed of conveyor movement based upon said data indicating rotational movement.

6. A method according to claim 5, wherein said speed of substrate movement is defined with reference to a clock rate of the printer and wherein processing data to determine said maximum number of drops which can be emitted from the print head to print a stroke optionally comprises determining a relationship between a clock rate of the printer and said data indicating rotational movement.

7. A method according to any preceding claim, wherein

said printer control data defines a number of drops of ink to be emitted from the print head to print a stroke; and/or
said printer control data is selected based upon a time taken to generate drops of ink at the print head; and/or
selecting printer control data comprises selecting printer control data from a set of printer control data comprising a plurality of printer control data items.

8. A method according to claim 7 as dependent upon claim 2 further comprising:
generating the set of printer control data with reference to the predetermined number of pixels in a stroke of the image data.

9. A method according to claim 8, wherein each printer control data item defines a number of drops of ink to be emitted from the printhead to print a stroke, and said printer control data items are ordered based upon said respective numbers of drops of ink to be emitted from the print head, optionally wherein selecting printer control data comprises: processing said printer control data item based upon said order.

10. A method according to claim 8 or 9, wherein selecting printer control data comprises:
selecting said set of printer control data from a plurality of sets of printer control data based upon said characteristic of said image.

11. A method according to any preceding claim, wherein said printing is continuous inkjet printing.

12. A computer readable medium carrying a computer program comprising computer readable instructions arranged to cause a computer to carry out a method according to any preceding claim.

13. An ink jet printer comprising:

a print head;
a memory storing processor readable instructions; and
a processor configured to read and execute instructions stored in said memory;
wherein said processor readable instructions comprise instructions controlling the processor to carry out a method according to any one of claims 1 to 12.

**Patentansprüche**

**1.** Verfahren zum Drucken eines Bildes auf ein Substrat (6), wobei das Drucken durch Bewegen des Substrats an einem Druckkopf (4) vorbei während eines Druckvorgangs und Drucken des Bildes durch Drucken einer Vielzahl von Zügen bewirkt wird,

und das Drucken jedes Zuges das Abgeben einer Vielzahl von Tintentropfen aus dem Druckkopf (4) umfasst, wobei sich die Vielzahl von Tintentropfen in einer ersten Richtung (8) erstreckt, die senkrecht zu der Bewegungsrichtung (9) des Substrats (6) an dem Druckkopf vorbei ist, wobei das Verfahren Folgendes umfasst:

Empfangen von Bilddaten, die ein zu druckendes Bild definieren, wobei die Bilddaten eine Vielzahl von Zügen definieren, wobei jeder Zug Datenwerte für jeden einer vorbestimmten Anzahl von Bildpunkten umfasst, und
Drucken des Bildes;
**dadurch gekennzeichnet, dass** die Bilddaten Daten bezüglich einer Eigenschaft des Bildes umfassen, wobei das Verfahren ferner das Auswählen von Druckersteuerdaten umfasst, welche die Vielzahl von Tintentropfen definieren, die von dem Druckkopf (4) abgegeben werden sollen, um einen der Züge zu drucken, Verarbeiten von Daten, um eine maximale Anzahl von Tropfen zu bestimmen, die von dem Druckkopf abgegeben werden können, um einen Zug zu drucken, wobei das Verarbeiten das Verarbeiten von Daten umfasst, die eine Geschwindigkeit der Substratbewegung angeben,
wobei das Auswählen auf Daten beruht, die die maximale Anzahl von Tintentropfen, die während eines der Züge aus dem Druckkopf abgegeben werden können, und die Eigenschaft des Bildes angeben, und wobei das Drucken auf den Daten, die das zu druckende Bild definieren, und den Druckersteuerdaten beruht.

**2.** Verfahren nach Anspruch 1, wobei die Eigenschaft des Bildes eine Anzahl von Bildpunkten, die jeden Zug des Bildes definiert, umfasst.

**3.** Verfahren nach Anspruch 2, wobei die Druckersteuerdaten eine Beziehung zwischen Bildpunkten der Bilddaten und den Tintentropfen, die während eines Zuges aus dem Druckkopf abgegeben werden sollen, definieren.

**4.** Verfahren nach einem der vorhergehenden Ansprüche, wobei die Vielzahl von Tintentropfen, die aus dem Druckkopf abgegeben werden soll, um einen Zug zu drucken, eine erste Vielzahl von Tintentropfen, die aus dem Druckkopf zum Absetzen auf dem Substrat abgegeben werden, umfasst und wahlweise ferner mindestens einen Tintentropfen, der nicht zum Absetzen auf dem Substrat vorgesehen ist, umfasst.

**5.** Verfahren nach einem der vorhergehenden Ansprüche, wobei das Substrat durch eine Fördereinrichtung an dem Druckkopf vorbei bewegt wird und die Daten, welche die Geschwindigkeit der Substratbewegung angeben, eine Geschwindigkeit der Fördereinrichtungsbewegung angeben, wobei das Verfahren wahlweise ferner das Empfangen von Daten, die eine Drehbewegung einer mit der Fördereinrichtung verknüpften Komponente angeben, und das Bestimmen einer Geschwindigkeit der Fördereinrichtungsbewegung auf der Grundlage der Daten, die eine Drehbewegung angeben, umfasst.

**6.** Verfahren nach Anspruch 5, wobei die Geschwindigkeit der Substratbewegung unter Bezugnahme auf eine Taktrate des Druckers definiert wird und wobei das Verarbeiten von Daten, um die maximale Anzahl von Tropfen, die aus dem Druckkopf abgegeben werden können, um einen Zug zu drucken, zu bestimmen, wahlweise das Bestimmen einer Beziehung zwischen einer Taktrate des Druckers und den Daten, die eine Drehbewegung angeben, umfasst.

**7.** Verfahren nach einem der vorhergehenden Ansprüche, wobei

die Druckersteuerdaten eine Anzahl von Tintentropfen, die aus dem Druckkopf abzugeben sind, um einen Zug zu drucken, definieren, und/oder
die Druckersteuerdaten auf der Grundlage einer Zeit, die es dauert, um Tintentropfen an dem Druckkopf zu erzeugen, ausgewählt werden, und/oder
das Auswählen von Druckersteuerdaten das Auswählen von Druckersteuerdaten aus einer Menge von Druckersteuerdaten umfasst, die eine Vielzahl von Druckersteuerdatenelementen umfasst.

8. Verfahren nach Anspruch 7, soweit abhängig von Anspruch 2, das ferner Folgendes umfasst:
das Erzeugen der Menge von Druckersteuerdaten unter Bezugnahme auf die vorbestimmte Anzahl von Bildpunkten in einem Zug der Bilddaten.

9. Verfahren nach Anspruch 8, wobei jedes Druckersteuerdatenelement eine Anzahl von Tintentropfen, die aus dem Druckkopf abzugeben sind, um einen Zug zu drucken, definiert und die Druckersteuerdatenelemente auf der Grundlage der jeweiligen Anzahlen von Tintentropfen, die aus dem Druckkopf abzugeben sind, geordnet werden, wobei wahlweise das Auswählen von Druckersteuerdaten Folgendes umfasst:
das Verarbeiten des Druckersteuerdatenelements auf der Grundlage der Ordnung.

10. Verfahren nach Anspruch 8 oder 9, wobei das Auswählen von Druckersteuerdaten Folgendes umfasst:
das Auswählen der Menge von Druckersteuerdaten aus einer Vielzahl von Mengen von Druckersteuerdaten auf der Grundlage der Eigenschaft des Bildes.

11. Verfahren nach einem der vorhergehenden Ansprüche, wobei das Drucken kontinuierliches Tintenstrahldrucken ist.

12. Computerlesbares Medium, das ein Computerprogramm trägt, das computerlesbare Anweisungen umfasst, die dafür angeordnet sind, dass sie einen Computer veranlassen, ein Verfahren nach einem der vorhergehenden Ansprüche auszuführen.

13. Tintenstrahldrucker, der Folgendes umfasst:

einen Druckkopf;
einen Speicher, der prozessorlesbare Anweisungen speichert; und
einen Prozessor, der dafür konfiguriert ist, in dem Speicher gespeicherte Anweisungen zu lesen und auszuführen;
wobei die prozessorlesbaren Anweisungen Anweisungen umfassen, die den Prozessor steuern, um ein Verfahren nach einem der Ansprüche 1 bis 12 auszuführen.

**Revendications**

1. Procédé d'impression d'une image sur un substrat (6), dans lequel l'impression est effectuée en déplaçant le substrat le long d'une tête d'impression (4) au cours d'une opération d'impression et en imprimant ladite image par l'impression d'une pluralité de traits ;

et l'impression de chaque trait comprend l'émission d'une pluralité de gouttes d'encre à partir de la tête d'impression (4) ;
ladite pluralité de gouttes d'encre s'étendant dans une première direction (8), perpendiculaire à la direction (9) de déplacement du substrat (6) le long de la tête d'impression (4) ; le procédé comprenant :

la réception de données d'image définissant une image devant être imprimée, lesdites données d'image définissant une pluralité de traits, chaque trait comprenant des valeurs de données pour chacun d'un nombre prédéterminé de pixels ; et
l'impression de ladite image ;
**caractérisé en ce que** les données d'image comprennent des données relatives à une caractéristique de l'image ;
le procédé comprenant en outre la sélection de données de commande de l'imprimante définissant la pluralité de gouttes d'encre devant être émises à partir de la tête d'impression (4) pour imprimer un desdits traits, le traitement de données pour déterminer un nombre maximal de gouttes qui peuvent être émises à partir de la tête d'impression pour imprimer un trait, dans lequel ledit traitement comprend le traitement de données indiquant une vitesse d'un déplacement de substrat ;
ladite étape de sélection étant basée sur des données indiquant le nombre maximal de gouttes d'encre pouvant être émis à partir de la tête d'impression au cours de l'un desdits traits et ladite caractéristique de l'image ; et
ladite impression est basée sur lesdites données définissant l'image devant être imprimée et lesdites données de commande de l'imprimante.

**2.** Procédé selon la revendication 1, dans lequel ladite caractéristique de ladite image comprend un nombre de pixels définissant chaque trait de ladite image.

**3.** Procédé selon la revendication 2, dans lequel lesdites données de commande de l'imprimante définissent une relation entre des pixels desdites données d'image et lesdites gouttes d'encre devant être émises à partir de ladite tête d'impression au cours d'un trait.

**4.** Procédé selon l'une quelconque des revendications précédentes, dans lequel ladite pluralité de gouttes d'encre devant être émises à partir de la tête d'impression pour imprimer un trait comprennent une première pluralité de gouttes d'encre émises à partir de la tête d'impression en vue d'un dépôt sur le substrat, et optionnellement comprennent en outre au moins une goutte d'encre non destinée à être déposée sur ledit substrat.

**5.** Procédé selon l'une quelconque des revendications précédentes, dans lequel ledit substrat est déplacé le long de la tête d'impression par un convoyeur, lesdites données indiquant la vitesse de déplacement du substrat indiquent une vitesse de déplacement du convoyeur, le procédé comprenant optionnellement en outre la réception de données indiquant le déplacement rotatif d'un composant associé audit moyen de transport, et la détermination d'une vitesse de déplacement du convoyeur sur la base desdites données indiquant le déplacement rotatif.

**6.** Procédé selon la revendication 5, dans lequel ladite vitesse de déplacement du substrat est définie par rapport à une fréquence d'horloge de l'imprimante, et dans lequel le traitement de données pour déterminer ledit nombre maximal de gouttes pouvant être émises à partir de la tête d'impression pour imprimer un trait comprend optionnellement la détermination d'une relation entre une fréquence d'horloge de l'imprimante et lesdites données indiquant le déplacement rotatif.

**7.** Procédé selon l'une quelconque des revendications précédentes, dans lequel

lesdites données de commande de l'imprimante définissent un nombre de gouttes d'encre devant être émises à partir de la tête d'impression pour imprimer un trait ; et/ou
lesdites données de commande de l'imprimante sont sélectionnées sur la base d'un temps nécessaire pour générer des gouttes d'encre au niveau de la tête d'impression ; et/ou
la sélection de données de commande de l'imprimante comprend la sélection de données de commande de l'imprimante parmi un ensemble de données de commande de l'imprimante comprenant une pluralité d'éléments de donnée de commande de l'imprimante.

**8.** Procédé selon la revendication 7, dépendant de la revendication 2, comprenant en outre :
la génération de l'ensemble de données de commande de l'imprimante en référence au nombre prédéterminé de pixels dans un trait des données d'image.

**9.** Procédé selon la revendication 8, dans lequel chaque élément de donnée de commande de l'imprimante définit un nombre de gouttes d'encre devant être émises à partir de la tête d'impression pour imprimer un trait, et lesdits éléments de donnée de commande de l'imprimante sont ordonnés sur la base desdits nombres respectifs de gouttes d'encre devant être émises à partir de la tête d'impression, optionnellement dans lequel la sélection de données de commande de l'imprimante comprend :
le traitement dudit élément de donnée de commande de l'imprimante sur la base dudit ordre.

**10.** Procédé selon la revendication 8 ou 9, dans lequel la sélection de données de commande de l'imprimante comprend :
la sélection dudit ensemble de données de commande de l'imprimante parmi une pluralité d'ensembles de données de commande de l'imprimante sur la base de ladite caractéristique de ladite image.

**11.** Procédé selon l'une quelconque des revendications précédentes, dans lequel ladite impression est une impression à jet d'encre continu.

**12.** Support lisible par un ordinateur contenant un programme d'ordinateur comprenant des instructions lisibles par ordinateur destinées à amener un ordinateur à exécuter un procédé selon l'une quelconque des revendications précédentes.

**13.** Imprimante à jet d'encre, comprenant :

une tête d'impression ;
une mémoire stockant des instructions lisibles par un processeur ; et
un processeur configuré pour lire et exécuter les instructions stockées dans ladite mémoire ;
dans lequel lesdites instructions lisibles par un processeur comprennent des instructions qui commandent le processeur pour qu'il exécute un procédé selon l'une quelconque des revendications 1 à 12.

FIG 1

**FIG 2**

FIG 3

FIG 4

22

23

RasterName
FamilyName
RasterFamilyIdentifier
PrintedDrops
ActualDrops
PixelSpan

24

25

**FIG 5**

RASTER
FILES

27

RASTER CATALOGUE

29    30    31    32    33    34

| Raster File | Raster Name | Family ID | Actual Drops | Pixel Spon | Unique ID |
|---|---|---|---|---|---|
| | | | | | |

28

*36*

37

RASTER MAP

38

| INDEX | Raster List | Name |
|---|---|---|
| | | |

35

# FIG 6

| RASTER CATALOGUE | | | | | |
|---|---|---|---|---|---|
| RasterFile | RasterName | FamilyID | ActualDrops | PixelSpan | UniqueID |
| 1x5.ras | 1x5 | 1 | 5 | 5 | 1 |
| 1x7.ras | 1x7 | 2 | 7 | 7 | 2 |
| 1x9.ras | 1x9 | 3 | 14 | 9 | 3 |
| 2x5.ras | 2x5 | 5 | 18 | 12 | 4 |
| 2x7_2.ras | 2x7 dedicated MkII | 6 | 26 | 16 | 5 |
| 2x7_1.ras | 2x7 dedicated MKI | 6 | 28 | 16 | 6 |
| 1x16_2.ras | 1x16 MkII | 8 | 32 | 16 | 7 |
| 1x16_1.ras | 1x16 MkI | 8 | 34 | 16 | 8 |
| 3x5.ras | 3x5 | 10 | 28 | 19 | 9 |

# FIG 7

**FIG 8**

| INHERITANCE TABLE | |
|---|---|
| Raster Family ID | High Quality Alternative |
| 4 | 5 |
| 6 | 8 |
| 7 | 10 |
| 9 | 11 |
| 12 | 18 |
| 13 | 16 |
| 15 | 18 |
| 17 | 22 |
| 19 | 21 |
| 20 | 23 |

## FIG 9

| RASTER MAP | | |
|---|---|---|
| Index | List Entries | Name |
| 1 | 1 | 1x5 |
| 2 | 2 | 1x7 |
| 3 | 3 | 1x9 |
| 4 | 4 | 2x5 |
| 5 | 5 | 2x7 dedicated Mk II |
| 6 | 6 | 2x7 dedicated Mk I |
| 7 | 7 | 1x16 Mk II |
| 8 | 8 | 1x16 Mk I |
| 9 | 9 | 3x5 |
| 10 | 8,7,6,5 | 2x7 dedicated |
| 11 | 8,7 | 16-high |

36     37     38

## FIG 10

FIG 11

FIG 12

FIG 13

**FIG 14**

**EP 2 280 833 B2**

**Patent documents cited in the description**

- US 4439775 A

- US 6109739 A